Europäisches Patentamt

European Patent Office

Office européen des brevets

(11) Numéro de publication: **0 277 863**
A1

## (12) DEMANDE DE BREVET EUROPEEN

(21) Numéro de dépôt: 88400119.9

(22) Date de dépôt: 20.01.88

(51) Int. Cl.⁴: **A 01 K 1/01**
A 01 K 1/035

(30) Priorité: 27.01.87 FR 8700918

(43) Date de publication de la demande:
10.08.88 Bulletin 88/32

(84) Etats contractants désignés: **ES GR**

(71) Demandeur: **Alarçon, Jean-Marc**
**19 Alleé de la Grande Promenade**
**F-78170 La Celle Saint-Cloud (FR)**

(72) Inventeur: **Alarçon, Jean-Marc**
**19 Alleé de la Grande Promenade**
**F-78170 La Celle Saint-Cloud (FR)**

(54) **Dispositif de nettoyage de la litière des animaux de compagnie.**

(57) Dispositif pour enlever les excréments et autres agglutinations dans la litière des animaux de compagnie.

L'invention concerne un dispositif permettant d'enlever rapidement et sûrement les excréments et autres agglutinations dans la litière des animaux, plus particulièrement celle des chats, pour qu'elle soit nette.

Il est constitué d'une plaque de base (1) qui s'emboîte dans plusieurs filets de mailles carrées (2) comportant deux poignées (3) chacun. Le tout est placé au fond du bac (4) avant d'y verser le gravier. Pour enlever les saletés se trouvant dans la litière, l'utilisateur tire verticalement sur chaque poignée (3) du filet (2) supérieur. Ce dernier entraîne les saletés vers la surface mais laisse das le bac (5) le sable (5) encore fluide. L'opération peut être renouvelée autant de fois qu'il y a de filets. Lorsqu'il ne reste plus de filet, la plaque de base est jetée lors du renouvellement de la litière.

FIG. 4

## Description

L'invention décrite ci-dessous concerne un dispositif d'enlèvement rapide des excréments et autres agglutinations dans la litière des animaux de compagnie, plus particulièrement celle des chats.

Actuellement, le moyen le plus couramment employé est l'utilisation d'une pelle. Celui-ci a le double inconvénient d'être désagréable à la vue autant qu'à l'odorat, et de prendre un certain temps tout en laissant le doute de n'avoir pas tout retiré.

Ce dispositif supprime ce doute, facilite la tâche et diminue considérablement le temps de celle-ci.

Il est constitué d'une plaque de base en matière plastique qui reçoit un certain nombre de filets superposés (3 ou plus). Le tout est placé au fond du bac avant le versement du gravier. Lorsque l'utilisateur désire retirer les excréments du bac, il enlève un filet en tirant verticalement et simultanément sur les deux cotés apparents du filet supérieur. Ce faisant, le filet entraîne vers la surface les excréments et le gravier agglutiné, tout en laissant dans le bac le gravier encore fluide.

L'opération est rapide et évite de remuer le gravier, ce qui pourrait dégager de mauvaises odeurs. Une fois ôté, le filet est jeté et la litière est nette. Lorsqu'il ne reste plus de filet, la plaque est jeté lors du renouvellement de la litière.

Selon une forme de réalisation préférentielle, la plaque de base est en matière plastique moulée, formant des sillons qui séparent des troncs de pyramides de base carrée. Ces sillons sont suffisament larges et profonds pour permettre le logement des fils des filets. Les mailles carrées des filets sont au dimensions des pyramides afin que ces dernières puissent s'emboîter dans les mailles. Les filets sont terminés, à chaque extrémité, par une feuille de matière plastique d'un largeur légèrement supérieure à la hauteur d'un bac, et formant une petite languette sur le coté extérieur pour en permettre la préhension. Les deux languettes sont colorées et numérotées pareillement. Chaque filet a sa couleur et son numéro afin qu'on soit sûr de tirer sur le seul filet supérieur. Une fois les filets emboîtés dans la plaque de base, une fine lamelle de ruban adhésif, de préférence en papier, est collée à divers endroits de la plaque pour empêcher les filets de se déboîter lors de la manipulation de mise en place du dispositif par l'utilisateur.

C'est en tirant sur les languettes verticalement que l'utilisateur déchire le ruban adhésif et déboîte le filet supérieur qu'il veut enlever.

La figure 1 représente, en perspective cavalière, l'aspect de la plaque de base.

La figure 2 représente, en perspective cavalière, l'aspect d'un filet complet.

La figure 3 représente, une vue en coupe d'une partie du dispositif.

La figure 4 est une représentation du dispositif placé dans le bac qui le contient.

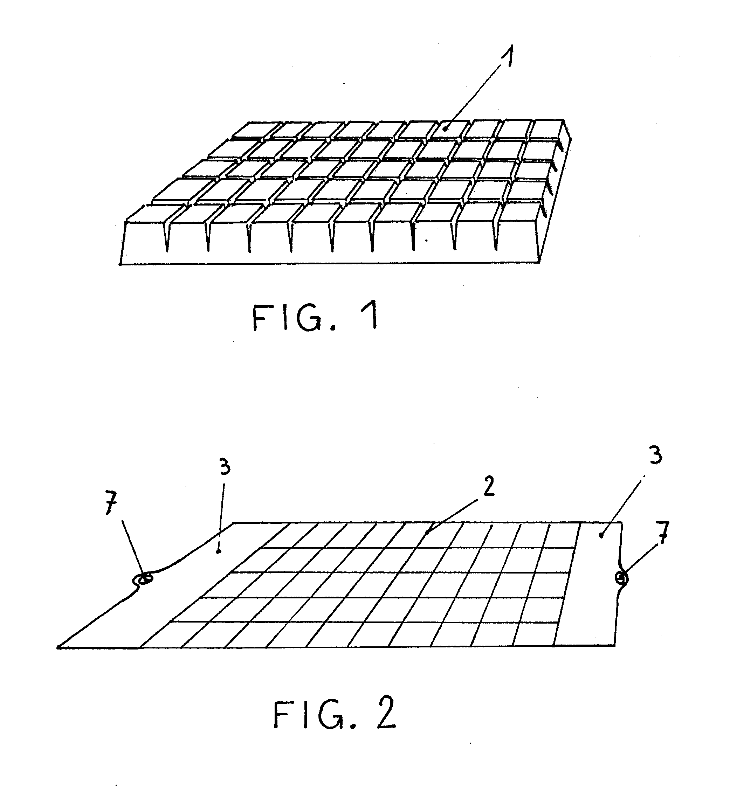

Les mailles du filet (2) de la figure 2 sont réalisées à des dimensions faisant en sorte que le gravier fluide puisse passer aisément au travers et que les excréments et le gravier aggluté soient retenus.

Selon une forme de réalisation possible, les languettes (7) de la figure 2 reçoivent chacune une pastille de même couleur et de même numéro. Ces numéros sont choisis en fonction du nombre de filets du dispositif et dans l'ordre dans lequel les filets seront otés (n°1 pour le premier, x pour le xième ).

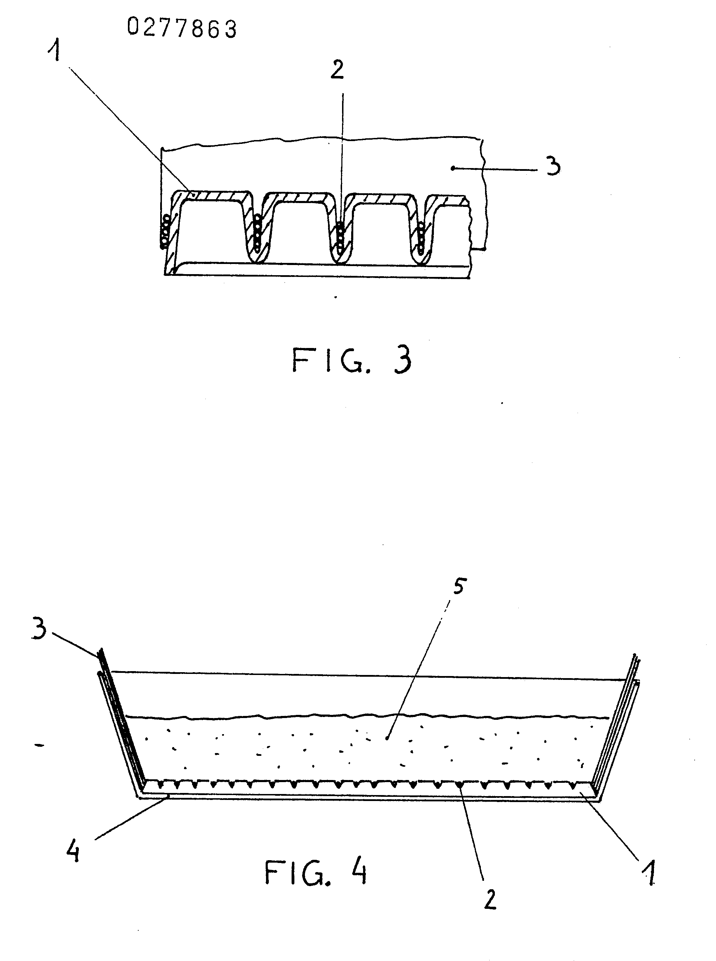

Sur la figure 4, les feuilles (3) sont posées sur les bords du bac (4) avant d'y verser le gravier.

Les figures présentées ne respectent pas les proportions du dispositif.

## Revendications

1) Dispositif d'enlèvement des excréments et autres agglutinations dans la litière des animaux de compagnie, caractérisé en ce qu'il comporte une plaque de base (1), ainsi que des filets (2) emboîtés dans celle-ci, destinés à extraire du gravier les déchets qui s'y trouvent, et que la plaque de base protège.

2) Dispositif selon la revendication 1) caractérisé en ce que la plaque de base (1) s'emboîte dans un ou plusieurs filets (2) dont le nombre peut varier.

3) Dispositif selon l'une quelconque des revendications précédentes caractérisé en ce que chaque filet (2) comporte une feuille (3) à chaque extrémité, servant de poignée pour les oter.

4) Dispositif selon la revendication 2) caractérisé en ce que chaque filet est repéré différemment.

0277863

FIG. 1

FIG. 2

0277863

FIG. 3

FIG. 4

Office européen
des brevets

**RAPPORT DE RECHERCHE EUROPEENNE**

Numero de la demande

EP 88 40 0119

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| Y | FR-A-1 375 553 (FRAISSANGE) * Figure 1; page 1, colonne de gauche, lignes 36-39 * | 1 | A 01 K 1/01<br>A 01 K 1/035 |
| Y | US-A-3 809 013 (RIGNEY) * Figures 1-6; colonne 4, lignes 57-64; colonne 5, lignes 30-48 * | 1 | |
| A | | 2,3 | |

|  |  | | DOMAINES TECHNIQUES RECHERCHES (Int. Cl.4) |
|---|---|---|---|
| | | | A 01 K |

Le présent rapport a été établi pour toutes les revendications

| Lieu de la recherche | Date d'achèvement de la recherche | Examinateur |
|---|---|---|
| LA HAYE | 21-04-1988 | VILBIG K |